# FASCICULE DE BREVET EUROPEEN

(11) **EP 3 697 275 B1**
(45) Date de publication et mention de la délivrance du brevet: **02.08.2023**
(21) Numéro de dépôt: 18803736.0
(22) Date de dépôt: 12.10.2018
(51) Int. Cl.: A47J 37/12

(54) **APPAREIL ÉLECTRIQUE DE CUISSON COMPORTANT UN SUPPORT DE VIDANGE AVEC CONFIGURATION DE RANGEMENT**
ELEKTRISCHES KOCHGERÄT MIT EINEM ABTROPFTRÄGER MIT EINER LAGERKONFIGURATION
ELECTRICAL COOKING APPLIANCE COMPRISING A DRAINING SUPPORT WITH A STORAGE CONFIGURATION

(30) Priorité: 16.10.2017 FR 1759689
(43) Date de publication de la demande: 26.08.2020
(73) Titulaire: SEB S.A., 69130 Ecully (FR)
(72) Inventeur: DIRAND, Pascal, 21160 Marsannay La Cote (FR); SARTOUT, Pierre, 21000 Dijon (FR); SEURAT, Frédéric, 21490 Bretigny (FR)
(74) Mandataire: SEB Développement
(86) Numéro de dépôt international: PCT/FR2018/052544
(87) Numéro de publication internationale: WO 2019/077241

(56) Documents cités:
- EP-A1- 1 504 705
- EP-A1- 2 241 231
- GB-A- 2 422 292
- US-A1- 2013 153 581

## Description

La présente invention concerne le domaine technique des appareils électriques de cuisson comportant une cuve apte à recevoir un bain de cuisson.

La présente invention concerne plus particulièrement les appareils électriques de cuisson comportant un ensemble de cuisson pouvant être disposé sur un support de vidange.

La présente invention concerne notamment, mais non exclusivement, les friteuses.

Il est connu du document EP1504705 un appareil électrique de cuisson comportant un ensemble de cuisson comprenant une cuve apte à recevoir un bain de cuisson, cet ensemble de cuisson pouvant être disposé sur un support de vidange formant un réceptacle de vidange. Cet appareil électrique de cuisson peut ainsi occuper une configuration de vidange dans laquelle le support de vidange porte l'ensemble de cuisson, la cuve étant munie d'un dispositif de vidange prévu pour le déversement du bain de cuisson dans le réceptacle de vidange lorsque l'appareil électrique de cuisson occupe la configuration de vidange. Le réceptacle de vidange peut être fermé par un couvercle. Toutefois l'ensemble de cuisson et le support de vidange doivent alors être rangés de manière séparée.

Un inconvénient de cette réalisation réside dans l'encombrement de l'appareil électrique de cuisson lorsqu'un bain de cuisson est conservé dans le réceptacle de vidange.

Un objet de la présente invention est de proposer un appareil électrique de cuisson comportant un ensemble de cuisson et un support de vidange, qui présente une construction permettant de réduire l'encombrement de l'appareil en configuration de rangement.

Cet objet est atteint avec un appareil électrique de cuisson, notamment friteuse électrique, comportant un ensemble de cuisson, un support de vidange formant un réceptacle de vidange, l'appareil électrique de cuisson pouvant occuper une configuration de vidange dans laquelle le support de vidange porte l'ensemble de cuisson, l'ensemble de cuisson comprenant une cuve apte à recevoir un bain de cuisson, la cuve étant munie d'un dispositif de vidange prévu pour le déversement du bain de cuisson dans le réceptacle de vidange lorsque l'appareil électrique de cuisson occupe la configuration de vidange, l'appareil électrique de cuisson pouvant occuper une configuration de rangement, du fait que dans la configuration de rangement le support de vidange repose sur l'ensemble de cuisson et le réceptacle de vidange s'étend à l'intérieur de la cuve, que l'ensemble de cuisson comporte deux poignées latérales opposées, que le support de vidange présente une collerette entourant le réceptacle de vidange, que la collerette est prolongée par une jupe inférieure entourant le réceptacle de vidange, que la jupe inférieure présente des échancrures inférieures, et que dans la configuration de rangement les échancrures inférieures reposent sur les poignées latérales. Ces dispositions permettent de faciliter la manipulation de l'ensemble de cuisson, de rigidifier le support de vidange, de protéger la paroi latérale du réceptacle de vidange, de faciliter la manipulation du support de vidange, de réduire l'encombrement de l'appareil électrique de cuisson dans la configuration de rangement, et aussi d'améliorer la stabilité de l'appareil électrique de cuisson dans la configuration de rangement.

Avantageusement alors, dans la configuration de rangement le support de vidange couvre la cuve. Cette disposition permet de protéger l'intérieur de la cuve lorsque l'appareil électrique de cuisson présente la configuration de rangement.

Avantageusement alors, la cuve porte les deux poignées latérales. Cette disposition permet de simplifier la construction de l'ensemble de cuisson. En alternative, les poignées latérales pourraient appartenir à un boîtier logeant la cuve.

Selon l'invention, dans la configuration de rangement le support de vidange repose sur les poignées latérales. Cette disposition permet d'abaisser les points d'appui du support de vidange lorsque l'appareil électrique de cuisson présente la configuration de rangement.

Avantageusement encore, dans la configuration de rangement le support de vidange s'étend à distance d'un bord supérieur de la cuve. Cette disposition permet d'éviter le contact direct entre le support de vidange et la cuve.

Avantageusement alors, dans la configuration de rangement la collerette s'étend à distance du bord supérieur de la cuve. Cette disposition permet de couvrir la cuve sans contact direct avec la cuve.

Selon un mode de réalisation, le dispositif de vidange comprend un clapet susceptible d'occuper une position de rappel stable fermée et une position ouverte, et l'appareil électrique de cuisson comporte un organe de commande amenant le clapet en position ouverte lorsque l'appareil électrique de cuisson occupe la configuration de vidange.

Avantageusement encore, le support de vidange présente une ou plusieurs zone(s) d'appui supérieure(s) portant l'ensemble de cuisson.

Avantageusement alors, la ou les zone(s) d'appui supérieure(s) est/sont formée(s) autour du réceptacle de vidange.

Avantageusement encore, la ou les zone(s) d'appui supérieure(s) est/sont formée(s) sur une collerette entourant le réceptacle de vidange.

Avantageusement encore, dans la configuration de rangement, le support de vidange s'étend à distance du fond de la cuve. Cette disposition permet d'éviter que le support entre en contact avec le fond de la cuve, qui peut être gras et/ou chaud.

Avantageusement encore, dans la configuration de rangement, le support de vidange s'étend à distance du dispositif de vidange. Cette disposition permet également d'éviter les risques de détérioration du dispositif de vidange lors de la mise en place du support de vidange dans la configuration de rangement.

Avantageusement encore, l'appareil électrique de cuisson comporte un dispositif de chauffage électrique fixé sous la partie inférieure de la cuve.

L'invention sera mieux comprise à l'étude d'un exemple de réalisation, pris à titre nullement limitatif, illustré dans les figures annexées, dans lesquelles :
- la figure 1 est une vue en perspective d'un ensemble de cuisson appartenant à un exemple de réalisation d'un appareil électrique de cuisson selon l'invention,
- la figure 2 est une vue en perspective d'un support de vidange, d'un couvercle et d'un bouchon appartenant à l'appareil électrique de cuisson illustré sur la figure 1, le bouchon étant en position de vidange,
- la figure 3 est une vue en perspective latérale du couvercle et du bouchon illustré sur la figure 2, le bouchon étant en position de conservation,
- la figure 4 est une vue en perspective de dessous du couvercle illustré sur les figures 2 et 3,
- la figure 5 est une vue en élévation du support de vidange illustré sur la figure 2,
- la figure 6 est une vue en perspective du support de vidange illustré sur les figures 2 et 5,
- la figure 7 est une vue en perspective du support de vidange illustré sur les figures 2, 5 et 6, selon une autre orientation,
- la figure 8 est une vue de dessous d'un dispositif de vidange appartenant à l'ensemble de cuisson illustré sur la figure 1,
- la figure 9 est une vue en perspective d'une partie du couvercle et du bouchon illustrés sur les figures 2, 3 et 4, le bouchon étant représenté en position de vidange,
- la figure 10 est une vue en élévation et en coupe de l'appareil électrique de cuisson occupant une configuration de vidange dans laquelle le support de vidange illustré sur la figure 2 porte l'ensemble de cuisson illustré sur la figure 1,
- la figure 11 est une vue en élévation et en coupe de l'appareil électrique de cuisson occupant une configuration de rangement, dans laquelle l'ensemble de cuisson illustré sur la figure 1 porte le support de vidange illustré sur la figure 2,
- la figure 12 est une vue en perspective de dessous du support de vidange illustré sur les figures 2, 5, 6, et 7,
- la figure 13 est une vue de côté de l'appareil électrique de cuisson occupant la configuration de vidange,
- la figure 14 est une vue en élévation et en coupe de l'appareil électrique de cuisson occupant la configuration de rangement.

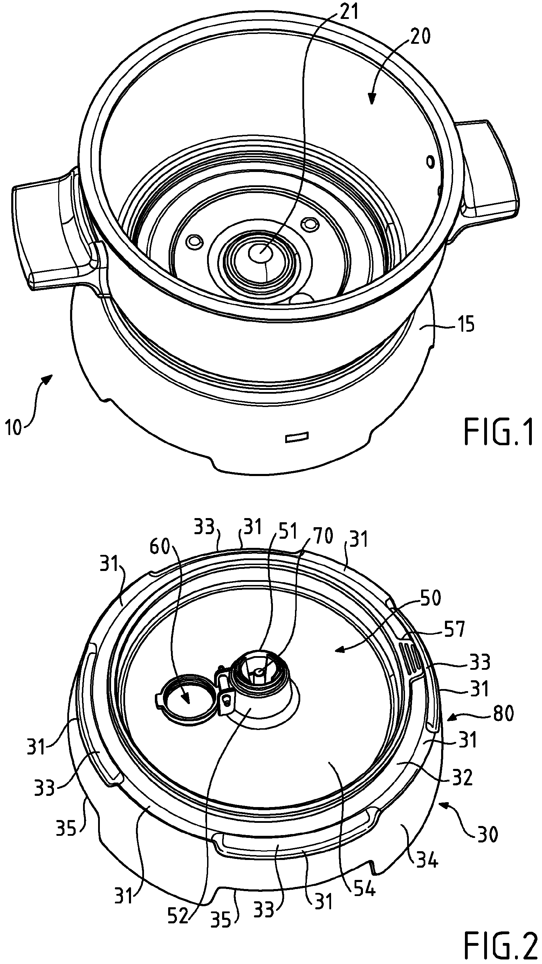

L'appareil électrique de cuisson 1 illustré sur les figures 1 à 10 est une friteuse électrique comportant un ensemble de cuisson 10 représenté sur la figure 1 et un socle de vidange 80 représenté sur la figure 2.

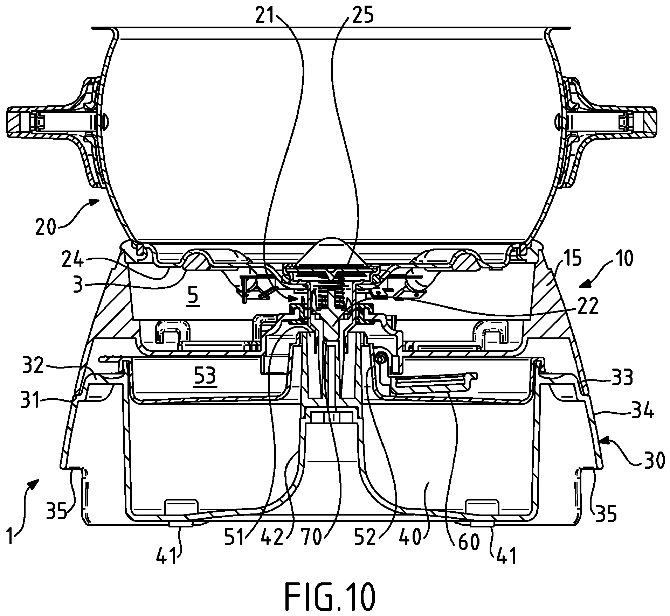

Tel que visible sur les figures 1 et 10, l'ensemble de cuisson 10 comprend une cuve 20 apte à recevoir un bain de cuisson. L'ensemble de cuisson 10 comporte une embase 15 agencée sous une partie inférieure 24 de la cuve 20, tel que mieux visible sur la figure 10.

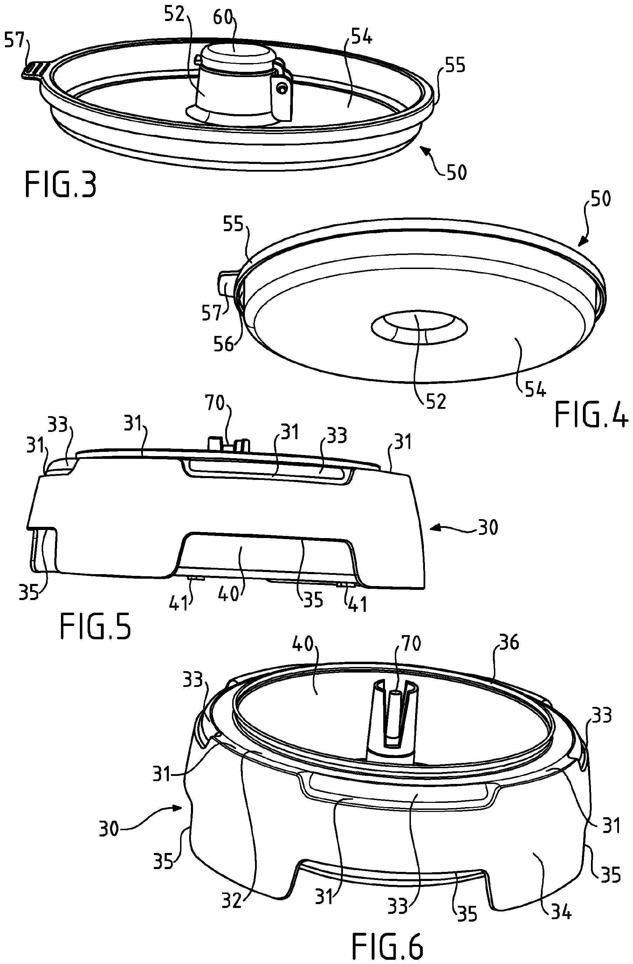

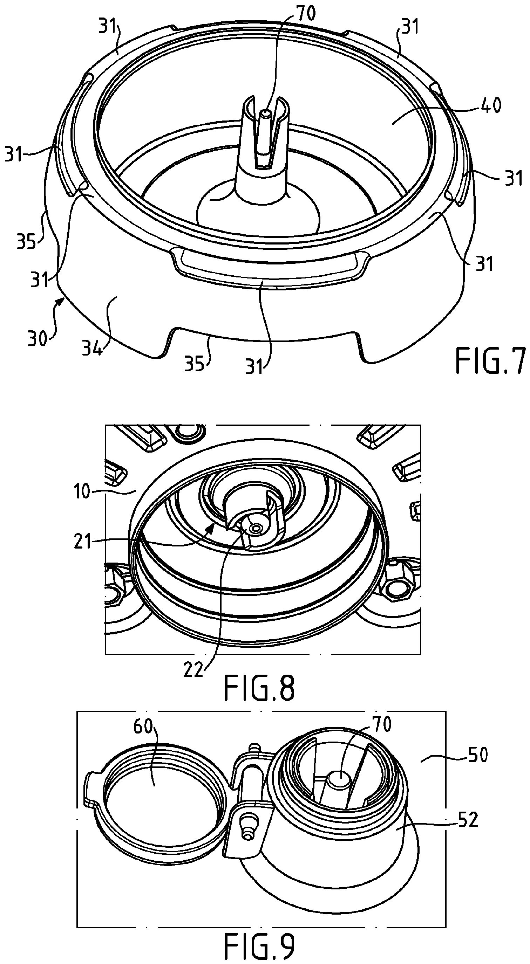

Le socle de vidange 80 comprend un support de vidange 30, représenté sur les figures 2, 5, 6, et 7, un couvercle 50, représenté sur les figures 2, 3, 4 et 9, et un bouchon 60, représenté sur les figures 2, 3 et 9. Le support de vidange 30 forme un réceptacle de vidange 40, tel que mieux visible sur les figures 6 et 7.

Le couvercle 50 est prévu pour être monté sur le support de vidange 30, tel qu'illustré sur la figure 2.

Le couvercle 50 présente une cheminée 52 s'élevant au-dessus d'une paroi d'obturation 54, tel que visible sur la figure 3. La paroi d'obturation 54 est entourée par une bordure périphérique 55 présentant un logement inférieur 56, tel que mieux visible sur la figure 4. La bordure périphérique 55 présente une languette externe 57 destinée à faciliter le retrait du couvercle 50 du support de vidange 30.

Le couvercle 50 ménage un passage 51 pour l'écoulement du bain de cuisson dans le support de vidange 30 lorsque le support de vidange 30 porte l'ensemble de cuisson 10. Ainsi lorsque le couvercle 50 est monté sur le support de vidange 30, le couvercle 50 ferme le réceptacle de vidange 40, à l'exception du passage 51. Plus particulièrement dans l'exemple de réalisation illustré sur les figures, la cheminée 52 ménage le passage 51.

Le bouchon 60 est prévu pour fermer le passage 51. Dans l'exemple de réalisation illustré sur les figures, le bouchon 60 est monté mobile sur le couvercle 50 entre une position de vidange, représentée sur les figures 2 et 10 dans laquelle le passage 51 est libre, et une position de conservation, représentée sur la figure 3, dans laquelle le passage 51 est obturé par le bouchon 60. Plus particulièrement dans l'exemple de réalisation illustré sur les figures, le bouchon 60 est monté pivotant sur le couvercle 50. Le bouchon 60 est porté par la cheminée 52. Tel que visible sur la figure 10, le couvercle 50 ménage un logement 53 recevant le bouchon 60 en position de vidange lorsque le couvercle 50 est monté sur le support de vidange 30 et que le support de vidange 30 porte l'ensemble de cuisson 10.

Le support de vidange 30 présente plusieurs zones d'appui supérieures 31 prévues pour porter l'ensemble de cuisson 10. Tel que bien visible sur la figure 2, les zones d'appui supérieures 31 sont agencées autour du couvercle 50 monté sur le support de vidange 30. Les zones d'appui supérieures 31 sont formées autour du réceptacle de vidange 40.

Plus particulièrement dans l'exemple de réalisation illustré sur les figures, les zones d'appui supérieures 31 sont formées sur une collerette 32 entourant le réceptacle de vidange 40. Les zones d'appui supérieures 31 sont agencées selon plusieurs niveaux sur la collerette 32. La collerette 32 présente plusieurs parois de centrage 33 prévues pour maintenir latéralement l'ensemble de cuisson 10 reposant sur les zones d'appui supérieures 31. Chaque paroi de centrage 33 est adjacente à l'une des zones d'appui supérieures 31. La collerette 32 est prolongée par une jupe inférieure 34 entourant le réceptacle de vidange 40. La jupe inférieure 34 présente des échancrures inférieures 35. Le support de vidange 30 présente une nervure 36 s'étendant entre la collerette 32 et le réceptacle de vidange 40. La nervure 36 entoure le réceptacle de vidange 40. Ainsi la nervure 36 est annulaire. La nervure 36 forme le bord supérieur du réceptacle de vidange 40.

Le support de vidange 30 présente des zones d'appui inférieures 41. Dans l'exemple de réalisation illustré sur les figures, les zones d'appui inférieures 41 sont agencées sous le réceptacle de vidange 40. Le réceptacle de vidange 40 présente par exemple trois zones d'appui inférieures 41 réparties en périphérie du fond du réceptacle de vidange 40.

La cuve 20 est munie d'un dispositif de vidange 21, visible sur les figures 8 et 10. Le dispositif de vidange 21 comprend un clapet 22. L'appareil électrique de cuisson 1 comporte un organe de commande 70 prévu pour actionner le clapet 22, visible sur les figures 2, 5, 6, 7, 9 et 10. Le clapet 22 est susceptible d'occuper une position de rappel stable fermée, en l'absence d'action extérieure, pour contenir le bain de cuisson dans la cuve 20, et une position ouverte, pour permettre la vidange du bain de cuisson, lorsque le clapet 22 est repoussé par l'organe de commande 70, tel que représenté sur la figure 10. Si désiré un clapet thermostatique 25 peut être agencé en amont du clapet 22, pour empêcher la vidange du bain de cuisson si la température de cuisson est trop élevée.

Dans l'exemple de réalisation illustré sur les figures, l'organe de commande 70 est issu du réceptacle de vidange 40, plus particulièrement du fond du réceptacle de vidange 40. Tel que mieux visible sur la figure 10, le fond du réceptacle de vidange 40 présente une protubérance 42. L'organe de commande 70 est formé par une pièce rapportée montée sur la protubérance 42. L'organe de commande 70 est agencé en position centrale dans le réceptacle de vidange 40.

L'appareil électrique de cuisson 1 comporte un dispositif de chauffage électrique 3 associé à la cuve 20. La cuve 20 est assemblée avec l'embase 15 pour former une chambre 5 logeant au moins une partie du dispositif de chauffage électrique 3. Dans l'exemple de réalisation illustré sur les figures, la chambre 5 loge le dispositif de chauffage électrique 3. Tel que mieux visible sur la figure 10, le dispositif de chauffage électrique 3 est fixé sous la partie inférieure 24 de la cuve 20. Le dispositif de chauffage électrique 3 s'étend ainsi sous la partie inférieure 24 de la cuve 20. Plus particulièrement dans l'exemple de réalisation illustré sur les figures, le dispositif de chauffage électrique 3 est réalisé sous la forme d'un élément chauffant blindé. La chambre 5 loge également les connexions électriques du dispositif de chauffage électrique 3. La chambre 5 peut loger aussi un dispositif de contrôle de la température et un dispositif de sécurité thermique. Le dispositif de contrôle de la température est par exemple un thermostat. Le dispositif de sécurité thermique est par exemple un fusible thermique ou un limiteur thermique réarmable. A titre de variante, le dispositif de chauffage électrique 3 peut notamment s'étendre en partie à l'intérieur de la cuve 20, ou encore être agencé dans la chambre 5 sans nécessairement être fixé sous la partie intérieure 24 de la cuve 20.

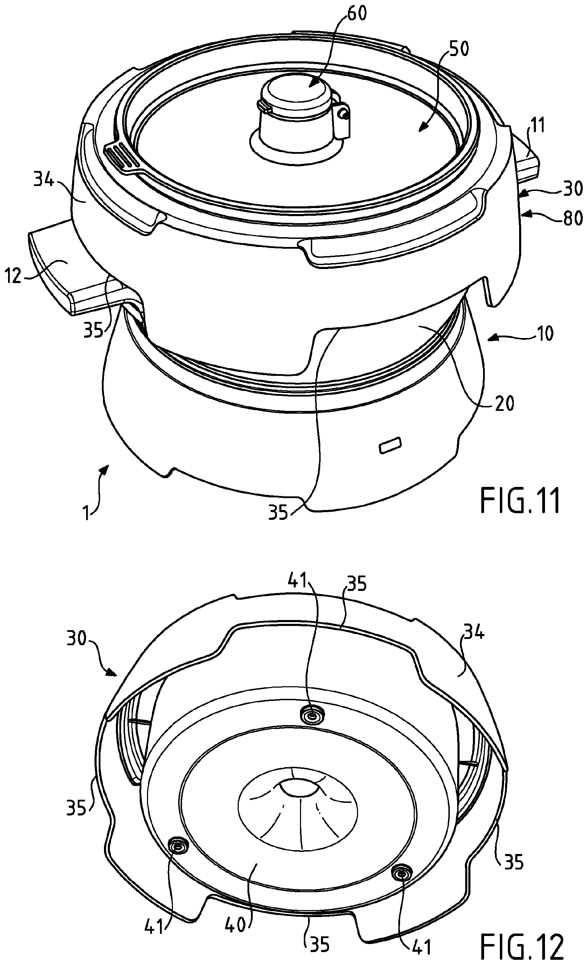

Les figures 11 à 14 illustrent l'appareil électrique de cuisson 1 dans une configuration de rangement, dans laquelle le support de vidange 30 repose sur l'ensemble de cuisson 10 et dans laquelle le réceptacle de vidange 40 s'étend à l'intérieur de la cuve 20.

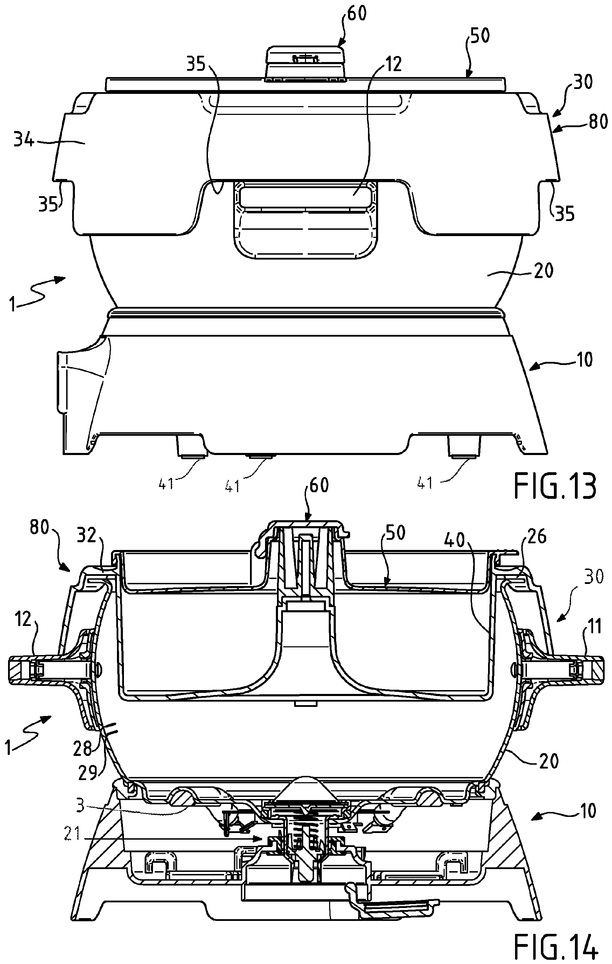

Plus particulièrement dans l'exemple de réalisation illustré sur les figures, dans la configuration de rangement le support de vidange 30 couvre la cuve 20, tel que bien visible sur la figure 14.

L'ensemble de cuisson 10 comporte deux poignées latérales 11, 12 opposées. La cuve 20 porte les deux poignées latérales 11, 12. Dans la configuration de rangement le support de vidange 30 repose sur les poignées latérales 11, 12. Tel que bien visible sur les figures 11, 13 et 14, dans la configuration de rangement les échancrures inférieures 35 reposent sur les poignées latérales 11, 12.

La figure 14 permet de voir l'agencement du réceptacle de vidange 40 à l'intérieur de la cuve 20 lorsque l'appareil électrique de cuisson 1 est dans la configuration de rangement. La collerette 32 s'étend à distance du bord supérieur 26 de la cuve 20. Le réceptacle de vidange 40 s'étend à distance de la cuve 20.

La cuve 20 comporte un repère supérieur 28 indiquant un niveau maximal pour le bain de cuisson dans la cuve 20 et un repère inférieur 29 indiquant un niveau minimal pour le bain de cuisson dans la cuve 20. Tel que bien visible sur la figure 14 dans la configuration de rangement la partie inférieure du réceptacle de vidange 40 s'étend au-dessus du repère supérieur 28. Ainsi l'utilisateur peut placer le socle de vidange 30 sur l'élément de cuisson alors que le bain de cuisson est encore présent dans la cuve 20. De préférence la partie inférieure du réceptacle de vidange 40 s'étend au moins un cm au-dessus du repère supérieur 28.

L'appareil électrique de cuisson 1 illustré sur les figures fonctionne et s'utilise de la manière suivante.

L'appareil électrique de cuisson 1 peut occuper une configuration de vidange dans laquelle le support de vidange 30 porte l'ensemble de cuisson 10, tel que représenté sur la figure 10. Pour atteindre cette configuration de vidange, l'utilisateur soulève l'ensemble de cuisson 10 et pose l'ensemble de cuisson 10 sur le support de vidange 30.

Dans la configuration de vidange illustrée sur la figure 10, l'organe de commande 70 amène le clapet 22 en position ouverte. Ainsi le positionnement de l'ensemble de cuisson 10 sur le support de vidange 30 suffit pour placer le clapet 22 en position ouverte. Le réceptacle de vidange 40 est prévu pour recevoir le bain de cuisson s'écoulant du clapet 22 lorsque l'appareil électrique de cuisson 1 occupe la configuration de vidange.

Lorsque la vidange a été réalisée, l'utilisateur peut retirer l'ensemble de cuisson 10 du support de vidange 30 et placer le bouchon 60 en position de conservation sur le couvercle 50 pour obturer le passage 51.

L'utilisateur peut placer l'appareil électrique de cuisson 1 dans la configuration de rangement illustrée sur les figures 11, 13 et 14, dans laquelle le support de vidange 30 repose sur l'ensemble de cuisson 10 et dans laquelle le réceptacle de vidange 40 s'étend à l'intérieur de la cuve 20.

Tel que bien visible sur la figure 14, dans la configuration de rangement le support de vidange 30 s'étend à distance du fond de la cuve 20.

Tel que bien visible sur la figure 14, dans la configuration de rangement le support de vidange 30 s'étend à distance du dispositif de vidange 21.

La configuration de rangement de l'appareil électrique de cuisson 1 est compacte. La cuve 20 est protégée par le support de vidange 30. Le couvercle 50 monté sur le support de vidange 30 permet une bonne conservation du bain de cuisson contenu dans le réceptacle de vidange 40 en utilisant le bouchon 60 pour fermer le passage 51.

A titre de variante, l'organe de commande 70 n'est pas nécessairement formé par une pièce rapportée sur le support de vidange 30, notamment sur le réceptacle de vidange 40. L'organe de commande 70 pourrait notamment être formé intégralement avec le support de vidange 30, notamment avec le réceptacle de vidange 40.

A titre de variante, l'organe de commande 70 n'est pas nécessairement issu du réceptacle de vidange 40. L'organe de commande 70 pourrait notamment être issu du support de vidange 30, par exemple entre la ou les zone(s) d'appui supérieures 31 et le réceptacle de vidange 40. L'organe de commande 70 pourrait aussi être issu du couvercle 50. De préférence alors le support de vidange 30 porte le couvercle 50 sous l'organe de commande 70 ou à proximité de l'organe de commande 70, pour que l'organe de commande 70 puisse déplacer le clapet 22 en évitant que le couvercle 50 soit soumis à des efforts importants et/ou à des déformations importantes.

A titre de variante, l'organe de commande 70 n'actionne pas nécessairement le clapet 22 lors de la mise en place de l'ensemble de cuisson 10 sur le socle de vidange 30. L'organe de commande 70 pourrait notamment être manoeuvré directement par l'utilisateur ou par l'intermédiaire d'un dispositif de commande motorisé, pour actionner le clapet 22. L'organe de commande 70 peut alors notamment être monté sur le support de vidange 30, ou sur le couvercle 50, ou sur l'ensemble de cuisson 10, si désiré directement sur le dispositif de vidange 21.

A titre de variante le support de vidange 30 pourrait notamment présenter une zone d'appui supérieure 31, annulaire ou non, ou plusieurs zones d'appui supérieures 31, pour porter l'ensemble de cuisson 10.

A titre de variante le support de vidange 30 pourrait notamment présenter une paroi de centrage 33, annulaire ou non, ou plusieurs parois de centrage 33, pour centrer l'ensemble de cuisson 10 sur le support de vidange 30.

A titre de variante le support de vidange 30 pourrait notamment présenter une zone d'appui inférieure 41, annulaire ou non, ou plusieurs zones d'appui inférieures 41, pour porter l'ensemble de cuisson 10. La ou les zone(s) d'appui inférieure(s) 41 n'est/ne sont pas nécessairement agencée(s) sous le réceptacle de vidange 40, mais pourrai(en)t par exemple être agencée(s) sous la jupe inférieure 34.

La présente invention n'est nullement limitée à l'exemple de réalisation décrit et à ses variantes, mais englobe de nombreuses modifications dans le cadre des revendications.

## Revendications

1. Appareil électrique de cuisson (1), notamment friteuse électrique, comportant un ensemble de cuisson (10), un support de vidange (30) formant un réceptacle de vidange (40), l'appareil électrique de cuisson (1) pouvant occuper une configuration de vidange dans laquelle le support de vidange (30) porte l'ensemble de cuisson (10), l'ensemble de cuisson (10) comprenant une cuve (20) apte à recevoir un bain de cuisson, la cuve (20) étant munie d'un dispositif de vidange (21) prévu pour le déversement du bain de cuisson dans le réceptacle de vidange (40) lorsque l'appareil électrique de cuisson (1) occupe la configuration de vidange, l'appareil électrique de cuisson (1) pouvant occuper une configuration de rangement, **caractérisé en ce que** dans la configuration de rangement le support de vidange (30) repose sur l'ensemble de cuisson (10) et le réceptacle de vidange (40) s'étend à l'intérieur de la cuve (20), **en ce que** l'ensemble de cuisson (10) comporte deux poignées latérales (11, 12) opposées, **en ce que** le support de vidange (30) présente une collerette (32) entourant le réceptacle de vidange (40), **en ce que** la collerette (32) est prolongée par une jupe inférieure (34) entourant le réceptacle de vidange (40), **en ce que** la jupe inférieure (34) présente des échancrures inférieures (35), **en ce que** dans la configuration de rangement les échancrures inférieures (35) reposent sur les poignées latérales (11, 12).

2. Appareil électrique de cuisson (1) selon la revendication 1, **caractérisé en ce que** dans la configuration de rangement le support de vidange (30) couvre la cuve (20).

3. Appareil électrique de cuisson (1) selon l'une des revendications 1 ou 2, **caractérisé en ce que** la cuve (20) porte les deux poignées latérales (11, 12).

4. Appareil électrique de cuisson (1) selon l'une des revendications 1 à 3, **caractérisé en ce que** dans la configuration de rangement le support de vidange (30) s'étend à distance d'un bord supérieur (26) de la cuve (20).

5. Appareil électrique de cuisson (1) selon la revendication 4, **caractérisé en ce que** dans la configuration de rangement la collerette (32) s'étend à distance du bord supérieur (26) de la cuve (20).

6. Appareil électrique de cuisson (1) selon l'une des revendications 1 à 5, **caractérisé en ce que** le dispositif de vidange (21) comprend un clapet (22) susceptible d'occuper une position de rappel stable fermée et une position ouverte, et **en ce que** l'appareil électrique de cuisson (1) comporte un organe de commande (70) amenant le clapet (22) en position ouverte lorsque l'appareil électrique de cuisson (1) occupe la configuration de vidange.

7. Appareil électrique de cuisson (1) selon l'une des revendications 1 à 6, **caractérisé en ce que** le support de vidange (30) présente une ou plusieurs zone(s) d'appui supérieure(s) (31) portant l'ensemble de cuisson (10).

8. Appareil électrique de cuisson (1) selon la revendication 7, **caractérisé en ce que** la ou les zone(s) d'appui supérieure(s) (31) est/sont formée(s) autour du réceptacle de vidange (40).

9. Appareil électrique de cuisson (1) selon la revendication 8, **caractérisé en ce que** la ou les zone(s) d'appui supérieure(s) (31) est/sont formée(s) sur une collerette (32) entourant le réceptacle de vidange (40).

10. Appareil électrique de cuisson (1) selon l'une des revendications 1 à 9, **caractérisé en ce que** dans la configuration de rangement, le support de vidange (30) s'étend à distance du fond de la cuve (20).

11. Appareil électrique de cuisson (1) selon l'une des revendications 1 à 10, **caractérisé en ce que** dans la configuration de rangement, le support de vidange (30) s'étend à distance du dispositif de vidange (21).

12. Appareil électrique de cuisson (1) selon l'une des revendications 1 à 2. **caractérisé en ce que** l'appareil électrique de cuisson (1) comporte un dispositif de chauffage électrique (3) fixé sous la partie inférieure (24) de la cuve (20).

## Patentansprüche

1. Elektrische Kocheinrichtung (1), insbesondere elektrische Fritteuse, umfassend eine Kochanordnung (10), einen Abtropfträger (30), der ein Abtropfgefäß (40) bildet, wobei die elektrische Kocheinrichtung (1) eine Abtropfkonfiguration einnehmen kann, in der der Abtropfträger (30) die Kochanordnung (10) trägt, wobei die Kochanordnung (10) einen Behälter (20) umfasst, der geeignet ist, ein Frittierbad aufzunehmen, wobei der Behälter (20) mit einer Abtropfvorrichtung (21) ausgestattet ist, die für das Entleeren des Frittierbads in das Abtropfgefäß (40) vorgesehen ist, wenn die elektrische Kocheinrichtung (1) die Abtropfkonfiguration einnimmt, wobei die elektrische Kocheinrichtung (1) eine Lagerkonfiguration einnehmen kann, **dadurch gekennzeichnet, dass** das Abtropfgefäß (30) in der Lagerkonfiguration auf der Kochanordnung (10) ruht und das Abtropfgefäß (40) sich im Inneren des Behälters (20) erstreckt, dadurch, dass die Kochanordnung (10) zwei gegenüberliegende seitliche Griffe (11, 12) umfasst, dadurch, dass der Abtropfträger (30) einen Kragen (32) umfasst, der das Abtropfgefäß (40) umgibt, dadurch, dass der Kragen (32) durch einen unteren Rock (34) verlängert wird, der das Abtropfgefäß (40) umgibt, dadurch, dass der untere Rock (34) untere Einbuchtungen (35) umfasst, dadurch, dass die unteren Einbuchtungen (35) in der Lagerkonfiguration auf den seitlichen Griffen (11, 12) ruhen.

2. Elektrische Kocheinrichtung (1) nach Anspruch 1, **dadurch gekennzeichnet, dass** der Abtropfträger (30) in der Lagerkonfiguration den Behälter (20) bedeckt.

3. Elektrische Kocheinrichtung (1) nach einem der Ansprüche 1 oder 2, **dadurch gekennzeichnet, dass** der Behälter (20) die zwei seitlichen Griffe (11, 12) trägt.

4. Elektrische Kocheinrichtung (1) nach einem der Ansprüche 1 bis 3, **dadurch gekennzeichnet, dass** der Abtropfträger (30) sich in der Lagerkonfiguration in einem Abstand von einem oberen Rand (26) des Behälters (20) erstreckt.

5. Elektrische Kocheinrichtung (1) nach Anspruch 4, **dadurch gekennzeichnet, dass** der Kragen (32) sich in der Lagerkonfiguration in einem Abstand vom oberen Rand (26) des Behälters (20) erstreckt.

6. Elektrische Kocheinrichtung (1) nach einem der Ansprüche 1 bis 5, **dadurch gekennzeichnet, dass** die Abtropfvorrichtung (21) eine Klappe (22) umfasst, die imstande ist, eine geschlossene stabile Rückstellposition und eine offene Position einzunehmen, und dadurch, dass die elektrische Kochanordnung (1) ein Steuerorgan (70) umfasst, das die Klappe (22) in die offene Position führt, wenn die elektrische Kocheinrichtung (1) die Abtropfkonfiguration einnimmt.

7. Elektrische Kocheinrichtung (1) nach einem der Ansprüche 1 bis 6, **dadurch gekennzeichnet, dass** der Abtropfträger (30) einen oder mehrere obere(n) Auflagebereich(e) (31) umfasst, der/die die Kochanordnung (10) trägt/tragen.

8. Elektrische Kocheinrichtung (1) nach Anspruch 7, **dadurch gekennzeichnet, dass** der oder die obere(n) Auflagebereich(e) (31) um das Abtropfgefäß (40) herum gebildet ist/sind.

9. Elektrische Kocheinrichtung (1) nach Anspruch 8, **dadurch gekennzeichnet, dass** der oder die obere(n) Auflagebereich(e) (31) auf einem Kragen (32) gebildet ist/sind, der das Abtropfgefäß (40) umgibt.

10. Elektrische Kocheinrichtung (1) nach einem der Ansprüche 1 bis 9, **dadurch gekennzeichnet, dass** der Abtropfträger (30) sich in der Lagerkonfiguration in einem Abstand vom Boden des Behälters (20) erstreckt.

11. Elektrische Kocheinrichtung (1) nach einem der Ansprüche 1 bis 10, **dadurch gekennzeichnet, dass** der Abtropfträger (30) sich in der Lagerkonfiguration in einem Abstand von der Abtropfvorrichtung (21) erstreckt.

12. Elektrische Kocheinrichtung (1) nach einem der Ansprüche 1 bis 11, **dadurch gekennzeichnet, dass** die elektrische Kocheinrichtung (1) eine unter dem unteren Teil (24) des Behälters (20) befestigte elektrische Heizvorrichtung (3) umfasst.

## Claims

1. Electrical cooking appliance (1), in particular an electric fryer, comprising a cooking assembly (10), a draining support (30) forming a draining receptacle (40), the electrical cooking appliance (1) being able to take on a draining configuration in which the draining support (30) carries the cooking assembly (10), the cooking assembly (10) comprising a vessel (20) capable of receiving a cooking bath, the vessel (20) being provided with a draining device (21) for emptying the cooking bath into the draining receptacle (40) when the electrical cooking appliance (1) is in the draining configuration, the electrical cooking appliance (1) being able to take on a storage configuration, **characterized in that** in the storage configuration the draining support (30) rests on the cooking assembly (10) and the draining receptacle (40) extends inside the vessel (20), **in that** the cooking assembly (10) comprises two opposite side handles (11, 12), **in that** the draining support (30) has a collar (32) surrounding the draining receptacle (40), **in that** the collar (32) is prolonged by a lower skirt (34) surrounding the draining receptacle (40), **in that** the lower skirt (34) has lower indentations (35), **in that** in the storage configuration the lower indentations (35) rest on the side handles (11, 12).

2. Electrical cooking appliance (1) according to claim 1, **characterized in that** in the storage configuration the draining support (30) covers the vessel (20).

3. Electrical cooking appliance (1) according to one of claims 1 or 2, **characterized in that** the vessel (20) carries the two side handles (11, 12).

4. Electrical cooking appliance (1) according to one of claims 1 to 3, **characterized in that** in the storage configuration, the draining support (30) extends at a distance from an upper edge (26) of the vessel (20).

5. Electrical cooking appliance (1) according to claim 4, **characterized in that** in the storage configuration the collar (32) extends at a distance from the upper edge (26) of the vessel (20).

6. Electrical cooking appliance (1) according to one of claims 1 to 5, **characterized in that** the draining device (21) comprises a valve (22) able to take on a closed stable return position and an open position, and **in that** the electrical cooking appliance (1) comprises a control member (70) bringing the valve (22) to open position when the electrical cooking appliance (1) takes on the draining configuration.

7. Electrical cooking appliance (1) according to one of claims 1 to 6, **characterized in that** the draining support (30) has one or more upper bearing zones (31) carrying the cooking assembly (10).

8. Electrical cooking appliance (1) according to claim 7, **characterized in that** the upper bearing zone(s) (31) is/are formed around the draining receptacle (40).

9. Electrical cooking appliance (1) according to claim 8, **characterized in that** the upper bearing zone(s) (31) is/are formed on a collar (32) surrounding the draining receptacle (40).

10. Electrical cooking appliance (1) according to one of claims 1 to 9, **characterized in that** in the storage configuration, the draining support (30) extends at a distance from the bottom of the vessel (20).

11. Electrical cooking appliance (1) according to one of claims 1 to 10, **characterized in that** in the storage configuration, the draining support (30) extends at a distance from the draining device (21).

12. Electrical cooking appliance (1) according to one of claims 1 to 11, **characterized in that** the electrical cooking appliance (1) comprises an electrical heating device (3) fixed under the lower portion (24) of the vessel (20).
